## Europäisches Patentamt

(19) **European Patent Office**

**Office européen des brevets**

(11) Veröffentlichungsnummer: **0 111 913**

**B1**

(12) **EUROPÄISCHE PATENTSCHRIFT**

(45) Veröffentlichungstag der Patentschrift:
23.07.86

(51) Int. Cl.⁴: **H 04 J 3/06**

(21) Anmeldenummer: **83112709.7**

(22) Anmeldetag: **16.12.83**

(54) Verfahren und Anordnung zur Überwachung der Synchronisation eines Zeitmultiplexsystems.

(30) Priorität: **21.12.82 DE 3247304**

(43) Veröffentlichungstag der Anmeldung:
**27.06.84 Patentblatt 84/26**

(45) Bekanntmachung des Hinweises auf die Patenterteilung:
**23.07.86 Patentblatt 86/30**

(84) Benannte Vertragsstaaten:
**AT BE CH DE FR GB IT LI NL SE**

(56) Entgegenhaltungen:
**CABLES AND TRANSMISSION, Band 29, Nr. 3, Juli 1975, Seiten 266-291, Paris, FR., J.L. DAGUET et al.: "Système M.I.C. à 30 voies à codage individuel"**
**IBM TECHNICAL DISCLOSURE BULLETIN, Band 11, Nr. 11, April 1969, Seiten 1379-1380, New York, USA, A.H. FREY: "Frame synchronization"**

(73) Patentinhaber: **Siemens Aktiengesellschaft, Berlin und München Wittelsbacherplatz 2, D-8000 München 2 (DE)**

(72) Erfinder: **Müller, Horst, Dipl.- Ing., Dammstrasse 11, D-8021 Hohenschäftlarn (DE)**
Erfinder: **Stummer, Baldur, Dipl.- Ing., Wilhelm-Kuhnert- Strasse 21, D-8000 München 90 (DE)**

## Beschreibung

Die Erfindung bezieht sich auf ein Verfahren zur Überwachung der Synchronisation eines Zeitmultiplexsystems und zur Einleitung einer Neusynchronisation bei einem vorgegebenen Wert der Häufigkeit von Nichtübereinstimmung zwischen einem erwarteten Rahmenkennungswert und dem tatsächlich an dieser Stelle auftretenden Bitmuster.

Bei digitalen Übertragungssystemen, die mit blockweiser Synchronisierung arbeiten, fügt man sendeseitig eine bestimmte Bit-Kombination periodisch in den Pulsrahmen ein. Diese sogenannte Rahmenkennung erkennt eine empfangsseitige Rahmenerkennungseinrichtung und veranlaßt über eine Taktzentrale die richtige Zuordnung der im Zeitmultiplexsignal gebündelten Signale der einzelnen Kanäle.

Beim 2-Mbit/s-Grundsystem der PCM-Hierarchie ist die Rahmenkennung die alternierende Folge des zweiten bis achten Bits des Rahmenkennungswortes (X0011011) und des zweiten Bits des Meldeworts (X1DYYYYY). Der Empfänger synchronisiert sich entsprechend der CCITT-Empfehlung G.737 oder G.738 in bestimmter Weise auf diese Rahmenkennung auf. Nach beiden Empfehlungen soll ein Verlust der Synchronisation angenommen werden, wenn das Rahmenkennungswort drei- oder viermal hintereinander mit einem Fehler behaftet empfangen wird. In einem solchen Fall muß eine Neusynchronisation eingeleitet werden. In der Zeitschrift "Cables and Transmission" 29 (1975) Juli, Nr. 3, Seiten 266 bis 291 ist dies näher erläutert.

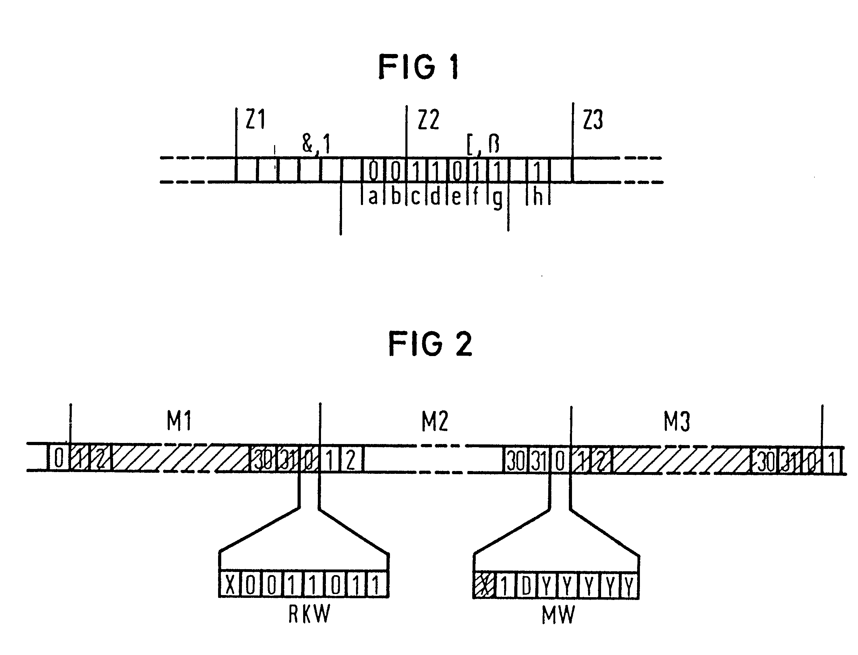

Bei der Übertragung synchroner 64-kbit/s-Datensignale ist es möglich, daß ein Teilnehmer, der über eine 64-kbit/s-Datenleitung mit einem Multiplexer verbunden ist, zufällig oder absichtlich für längere Zeit diese Rahmenkennung vortäuscht. Dieser Fall tritt ein, wenn ein Teilnehmer beispielsweise für Testzwecke zwei bestimmte Zeichen des Teletex-Alphabets alternierend überträgt. Fig. 1 zeigt einige mögliche Fälle der Vortäuschung. Im Zeichen Zl enden beispielsweise die Zeichen für & und 1 mit zwei Nullen. Im Zeichen Z2 beginnen beispielsweise die Zeichen für [ und β mit der Folge 11011 und haben weiter an vorletzter Stelle eine 1. Die vorgetäuschte Rühmenkennung ist durch die Buchstaben a bis h bezeichnet.

Wenn während dieser Zeit der Vortäuschung der Empfänger beispielsweise durch eine kurze Streckenunterbrechung den Synchronismus verliert, so kann er bei einer Neusynchronisierung auf die vorgetäuschte Rahmenkennung a bis h auf synchronisieren und in diesem falschen Synchronzustand verharren.

Aufgabe der Erfindung ist es, ein Verfahren und eine Anordnung anzugeben, die einen vollständigen Schutz gegen ein Verharren in einem zufällig oder sogar absichtlich vorgetäuschten falschen Synchronzustand bieten.

Bei einem Verfahren zur Überwachung der Synchronisation eines Zeitmultiplexsystems wird diese Aufgabe erfindungsgemäß dadurch gelöst, daß sendeseitig während eines definierten Meßzeitraums in definierter zeitlicher Relation zur Rahmenkennung die Gerad- oder Ungeradzahligkeit der Summe aller ausgesendeten Bits eines logischen Zustands ermittelt wird, daß ein Paritätsbit gebildet wird, dessen logischer Zustand eine Aussage über die ermittelte Gerad- oder Ungeradzahligkeit abgibt, daß das Paritätsbit in einen unbelegten Zeitschlitz des Pulsrahmens eingefügt wird, daß empfangsseitig während desselben Meßzeitraumes in derselben zeitlichen Relation zur erkannten aber möglicherweise falschen Rahmenkennung die Gerad- oder Ungeradzahligkeit der Summe aller empfangenen Bits des sendeseitig gewählten logischen Zustands ermittelt wird und daß das empfangsseitige Ergebnis mit der Aussage des empfangenen Paritätsbits verglichen wird.

Vorteilhaft ist es, wenn der Meßzeitraum der Länge eines Pulsrahmens entspricht und wenn er jeweils im Anschluß an das Auftreten eines blockweisen Rahmenkennungswortes beginnt.

Vorteilhaft ist es weiter, wenn sende- und empfangsseitig die Bits des logischen Zustandes "1" zur Ermittlung der Gerad- oder Ungeradzahligkeit herangezogen werden und wenn das Paritätsbit bei einer sendeseitigen Ungeradzahligkeit den logischen Zustand "1" erhält.

Vorteilhaft ist es außerdem, wenn eine neue Synchronisation bei 35% Nichtübereinstimmung eingeleitet wird.

Vorteilhaft ist es schließlich, wenn das Polaritätsbit in einen unbelegten Zeitschlitz des Meldeworts eingefügt wird.

Eine Anordnung zur sendeseitigen Erzeugung von Paritätsbits ist in vorteilhafter Weise dadurch gekennzeichnet, daß ein erstes UND-Gatter vorgesehen ist, dessen erster Eingang zur Aufnahme des Zeitmultiplexsignals und dessen zweiter Eingang zur Aufnahme von Torimpulsen für den Meßzeitraum dient, und daß ein JK-Flipflop vorgesehen ist, dessen J- und dessen K-Eingang mit dem Ausgang des UND-Gatters verbunden sind, dessen Takteingang zur Aufnahme des Bittaktes des Zeitmultiplexsignals, dessen Rückstelleingang zur Aufnahme der Rückstellimpulse für den Meßzeitraum und dessen Ausgang zur Abgabe der Paritätsbits dient.

Eine Anordnung zur empfangsseitigen Auswertung des Paritätsbits ist vorteilhafterweise derart ausgestaltet, daß eine Anordnung zur Erzeugung von Paritätsbits vorgesehen ist, daß ein Äquivalenzgatter vorgesehen ist, dessen erster Eingang mit dem ersten Eingang des UND-Gatters und dessen zweiter Eingang mit dem Ausgang des JK-Flipflops verbunden ist, daß ein erstes D-Flipflop vorgesehen ist, dessen D-Eingang mit dem Ausgang des äquivalenzgatters verbunden ist und dessen Takteingang zur Aufnahme eines Taktes zur Anzeige des sendeseitigen Paritätsbits dient, daß ein erstes Integrationsglied vorgesehen ist, dessen Eingang mit dem Ausgang des zweiten D-Flipflops verbunden ist, daß ein erster Komparator vorgesehen ist, dessen invertierender Eingang mit dem Ausgang des ersten Integrationsgliedes und dessen nichtinvertierender Eingang mit dem Abgriff eines an Betriebsspannung liegenden Spannungsteilers verbunden ist, daß ein zweites D-Flipflop vorgesehen ist, dessen D-Eingang mit dem Ausgang des ersten Komparators verbunden ist und dessen Takteingang zur Aufnahme eines Rahmentaktes dient, daß eine Diode vorgesehen ist, deren Anode mit dem Ausgang des ersten Integrationsgliedes und deren Kathode mit dem Ausgang des zweiten D-Flipflops verbunden ist, daß ein zweites UND-Gatter vorgesehen ist, dessen erster Eingang mit dem Ausgang des zweiten D-Flipflops verbunden ist und dessen zweiter Eingang der Aufnahme des Bittaktes dient, daß eine Synchronisiereinrichtung vorgesehen ist, deren erster Eingang der Aufnahme des Zeitmultiplexsignals dient, deren zweiter Eingang mit dem Ausgang des zweiten UND-Gatters verbunden ist, dessen erster Ausgang der Abgabe eines neuen Rahmentaktes und dessen zweiter Ausgang der Abgabe einer Alarmsignales dient, daß ein zweites Integrationsglied vorgesehen ist, dessen Eingang mit dem Ausgang des ersten D-Flipflops verbunden ist, daß ein zweiter Komparator vorgesehen ist, dessen invertierender Eingang mit dem Ausgang des zweiten Integrationsgliedes und dessen nichtinvertierender Eingang mit dem Abgriff des Spannungsteilers verbunden ist, und daß ein ODER-Gatter vorgesehen ist, dessen erster Eingang mit dem zweiten Ausgang der Synchronisiereinrichtung und dessen zweiter Eingang mit dem Ausgang des zweiten Komparators verbunden ist und dessen Ausgang als Synchronalarmausgang dient.

Anhand von Ausführungsbeispielen wird die Erfindung nachstehend näher beschrieben.

Fig. 2 zeigt einen Rahmenaufbau,

Fig. 3 zeigt eine Schaltungsanordnung zur sendeseitigen Erzeugung eines Paritätsbits,

Fig. 4 zeigt ein Impulsdiagramm zu Fig.3 und

Fig. 5 zeigt eine Schaltungsanordnung zur empfangsseitigen Auswertung des Paritätsbits.

Das erfindungsgemäße Verfahren kann die Verwendung eines freien Bits X an erster Stelle im Meldewort MW eines 2-Mbit/s-Pulsrahmens als Paritätsbit vorsehen (Fig.2). Die Anzahl der "1"-Bits wird - ausgehend vom ersten Bit des Zeitabscnitts Nr. 1 im Pulsrahmen bis zum achten Bit des folgenden Rahmenkennungswortes RKW in den schraffierten Meßzeiträumen MI, M3, M5... $M_n$ auf Gerad- oder Ungeradzahligkeit geprüft, d.h. es werden 256 Bits betrachtet. Ist im vorausgegangenen Meßeitraum die Anzahl der "1" ungeradzahlig, so wird das Paritätsbit logisch "1" gesetzt, ist die Anzahl der "1" geradzahlig, so wird das Paritätsbit logisch "0" gesetzt.

Wird empfangsseitig in einem Zeitintervall von $100 \text{ ms} \leq t \leq 300 \text{ ms}$ das Paritätsbit in weniger als $65\% \pm 10\%$ der Fälle richtig erkannt, so muß ein vorgetäuschter Synchronzustand angenommen und eine neue Synohronisation eingeleitet werden. Dieser neue Suchvorgang muß in geeigneter Weise - d.h. unmittelbar nach dem Rahmenkennungswort RKW beginnend - durchgeführt werden, um nicht wiederum eine Aufsynchronisierung auf die vorgetäuschte Rahmenkennung zu bewirken.

Die Integrationszeit von $t \leq 100 \text{ ms}$ ist als Schutz gegen mögliche burstartige Störungen bis zu etwa 50ms Dauer auf der Übertragungsstrecke vorgesehen. Werden während einer solchen Störung im Mittel 50% der Paritätsbits als falsch erkannt und während weiterer 50ms im störungsfreien Betrieb sämtliche Paritätsbits als richtig erkannt, so werden während einer Integrationszeit von 100 ms im Mittel 75% der Paritätsbits richtig erkannt. Die obere Toleranzgrenze (65% + 10%) der Erkennungswahrscheinlichkeit sollte daher unter 75% liegen.

Das erfindungsgemäße Synchronisationsverfahren ist bis zu einer Bitfehlerquote $p \leq 1{,}5 \cdot 10^{-3}$, also bis oberhalb der Fehlerquote $p \leq 10^{-3}$, die ohnehin zu einem Fehlerratenalarm und damit zum Abwerfen der Teilnehmer (Senden von AIS = alarm indication signal an der Schnittstelle D2ab zum Teilnehmer hin) führt, anwendbar. Bei einer Bitfehlerquote $p = 1{,}5 \cdot 10^{-3}$ und unter der Annahme einer Poisson-Verteilung der Bitfehler werden im Mittel etwa 75% der Paritätsbits noch als richtig erkannt.

Bei einem vorgetäuschten Synchronzustand werden im Mittel 50% der Paritätsbits als richtig vorgetäuscht, die untere Toleranzgrenze (65% - 10%) muß daher über 50% liegen.

Werden die Paritätsbits entsprechend obigem Kriterium nicht richtig erkannt, so soll nach spätestens 500 ms Synchronalarm abgegeben werden. Dieser Alarm ist erforderlich, um ein fehlerhaftes Bilden des Paritätsbits auf der Sendeseite zu erkennen.

Mit Hilfe des erfindungsgemäßen Verfahrens können insbesondere sehr kleine Bitfehlerquoten schnell gemessen werden.

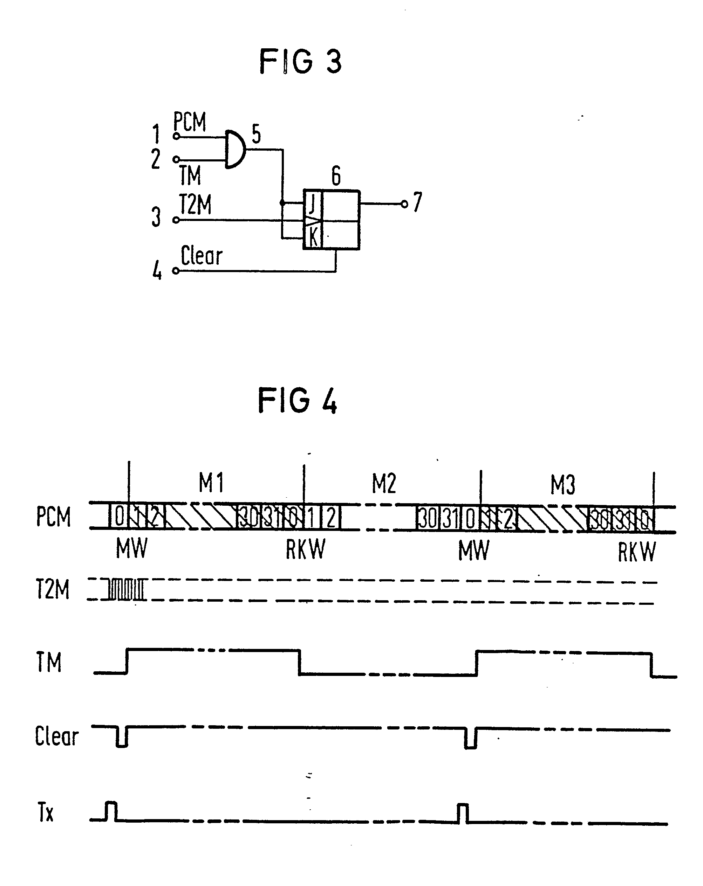

Eine sendeseitige Anordnung zur Erzeugung der Paritätsbits zeigt Fig. 3. Die Anordnung besteht aus einem UND-Gatter 5 und einem JK-Flipflop 6. Fig. 4 zeigt ein Impulsdiagramm dazu.

Werden an den Eingang 1 ein Zeitmultiplexsignal PCM, an den Eingang 2 Torimpulse TM für den Meßzeitraum, an den Takteingang 3 ein 2-MHz-Bittakt T2M und an den Eingang 4 Rückstellimpulse Clear angelegt, dann erscheint am Ausgang 7 ein Paritätsbit eines logischen Zustandes, der von der Gerad- oder Ungeradzahligkeit der logischen "1" am Eingang 1 abhängt. Dies geschieht in der Weise, daß der Torimpuls TM im Meßzeitraum das UND-Gatter 5 Öffnet, so daß das PCM-Signal nur während dieses Zeitraums für die Paritätsprüfung an den J- und K-Eingang des JK-Flipflops 6 gelangt. Dieses JK-Flipflop 6 wird durch den Rückstellimpuls Clear vor jedem Meßzeitraum auf logisch "0" zurückgesetzt und wechselt beim logischen Zustand "1" an den JK-Eingängen mit jedem 2-MHz-Taktimpuls seinen Ausgangszustand. Bei einer logischen "0" an den JK-Eingängen bleibt der jeweilige Ausgangszustand erhalten. Am Ende des Meßzeitraumes MI, M3 oder M5 wird am Ausgang 7 bei einer ungeraden Anzahl von logischen "1" im PCM-Signal eine logische "1" abgegeben; bei einer geraden Anzahl von "1" eine logische "0". Dieses Signal wird in das PCM-Signal an der Stelle des ersten Bits X in das Meldewort MW eingefügt.

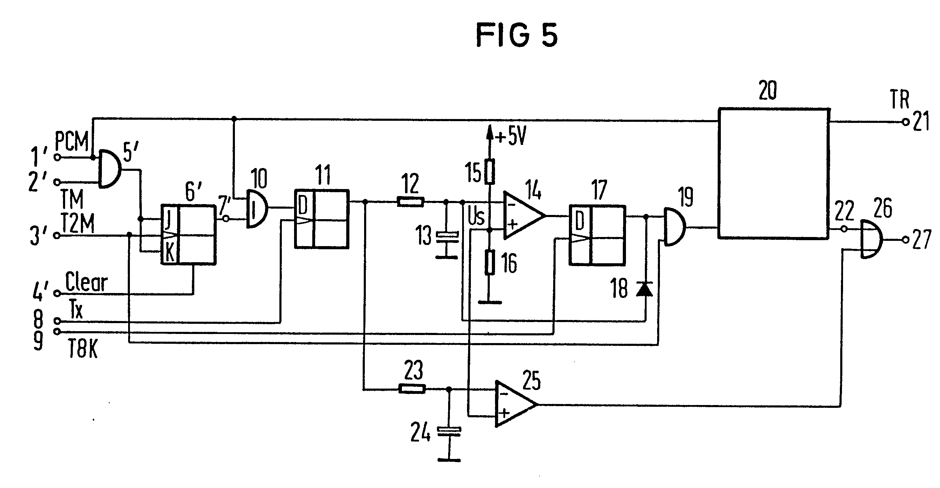

Figur 5 zeigt eine empfangsseitige Anordnung zur Auswertung der Paritätsbits. Der Anordnungsteil mit den Bezugszeichen 1' bis 7' entspricht der sendeseitigen Anordnung nach Fig. 3. Die Anordnung enthält weiter ein Äquivalenzgatter 10, D-Flipflops 11 und 17, Integrationsglieder 12 und 13; 23 und 24, einen Spannungsteiler 15 und 16, Komparatoren 14 und 25, eine Diode 18, ein UND-Gatter 19, eine Synchronisiereinrichtung 20 und ein ODER-Gatter 26. Ein Eingang 8 ist zur Aufnahme eines Taktes Tx zur Anzeige des sendeseitigen Paritätsbits und ein Eingang 9 zur Aufnahme eines 8-kHz-Rahmentaktes T8K vorgesehen. Der Ausgang 21 dient zur Abgabe eines neuen Rahmentaktes TR und der Ausgang 27 der Abgabe eines Synchronalarms.

Zunächst wird mit Hilfe des UND-Gatters 5' und des JK-Flipflops 6' wie auf der Sendeseite das ankommende PCM-Signal auf eine gerade oder ungerade Anzahl von logischen "1" untersucht. Das am Ausgang 7' anstehende Ergebnis wird im Äquivalenzgatter 10 mit dem im PCM-Signal enthaltenen Paritätsbit verglichen. Bei einer fehlerfreien Übertragung wird eine Übereinstimmung festgestellt und damit am Ausgang des Äquivalenzgatters 10 eine logische "0" entstehen; bei Nichtübereinstimmung entsteht dagegen eine logische "1". Zum Zeitpunkt des Auftretens des Paritätsbits übernimmt das D-Flipflop 11 mit Hilfe des Taktes Tx das Ergebnis des Äquivalenzvergleichs und speichert es für die Dauer von jeweils zwei Pulsrahmen bis zum nächstfolgenden Paritätsbitvergleich ab. Das nachfolgende Integrationsglied 12, 13 mit einer Zeitkonstanten $100\ ms \leqq \tau_1 \leqq 300\ ms$ ist als Schutz gegen Störungen auf der Übertragungsstrecke vorgesehen. Am nichtinvertierenden Eingang des Komparators 14 wird mittels der Widerstände 15, 16 eine Schwellenspannung $U_s$ eingestellt; entsprechend 65% $\pm$ 10% richtig erkannter Paritätsbits

$$\left(U_s = 0,35 \cdot 5\ V = 5\ V \cdot \frac{R_{16}}{R_{15} + R_{16}}\right).$$

Solange das Paritätsbit mit obiger Wahrscheinlichkeit richtig erkannt wird (kein Alarm), liegt am Komparator 14 eine logische "1" und damit auch am Ausgang des D-Flipflops 17, das mit dem 8-kHz-Takt T8K getaktet wird, eine logische "1". Der 2-MHz-Takt T2M gelangt dann unverändert über das UND-Gatter 19 zur Synchronisiereinrichtung 20. Im Alarmfall wechselt der Ausgang des Komparators 14 auf logisch "0". Mit der nächsten positiven Flanke des Taktes T8K geht der Ausgang des D-Flipflops 17 auf logisch "0" und entlädt dabei über die Diode 18 den Kondensator 13. Dadurch wird der Nicht-Alarmfall vorgetäuscht; der Ausgang des Komparators 14 springt auf logisch "1". Dieser Zustand wird mit der nächsten positiven Flanke des Taktes T8K vom D-Flipflop 17 übernommen. Am Ausgang dieses D-Flipflops 17 wird dadurch ein negativer Impuls von der Länge einer 8-kHz-Taktperiode (125μs) erzeugt. Dieser Impuls sperrt über das UND-Gatter 19 den Takt T2M für eine Zeit von 125μs; entsprechend einer Anzahl von 256 2-MHz-Taktimpulsen.

Dadurch soll erreicht werden, daß die Synchronisiereinrichtung 20 asynchron wird und eine neue Synchronisation einleitet. Der neue Suchvorgang muß unmittelbar nach dem Rahmenkennungswort RKW beginnen, um nicht wiederum auf eine vorgetäuschte Rahmenkennung aufzusynchronisieren. Da beim realisierten System PCM 30 F dieser Suchvorgang normalerweise unmittelbar nach dem Meldewort MW beginnen würde, wird durch das Sperren von 256 2-MHz-Taktimpulsen eine Verschiebung um einen Pulsrahmen und damit ein Beginn des Suchvorganges unmittelbar nach dem Rahmenkennungswort RKW erreicht.

Bei Systemen, bei denen der Suchvorgang zu einem anderen Zeitpunkt im Pulsrahmen beginnt, ist die Anzahl der zu sperrenden 2-MHz-Taktimpulse (beispielsweise nur ein 2-MHz-Taktimpuls) entsprechend zu wählen. Dem D-Flipflop 17 ist dann ein entsprechender Takt (beispielsweise ein 2-MHz-Takt) zuzuführen. Am Ausgang 21 gibt die Synchronisiereinrichtung 20 einen 8-kHz-Rahmentakt TR zum setzen der empfangsseitigen Taktzentrale und am Ausgang 22 im nichtsynchronen Zustand ein Alarmsignal (logisch "1") ab.

Ein zweites Integrationsglied 23, 24 mit einer Zeitkonstante $\tau_2 < 500\ ms$ und ein zweiter Komparator 25 sind vorgesehen, um nach spätestens 500 ms ein Alarmsignal am Ausgang des Komparators 25 abzugeben, wenn die Paritätsbits entsprechend obigem Kriterium nicht richtig erkannt werden. Dieses Alarmsignal wird in dem ODER-Gatter 26 mit dem Signal an der Klemme 22 verknüpft und führt am Ausgang 27 zu einem Synchronalarm.

Fig. 4 zeigt unten noch den Takt Tx.

**Patentansprüche**

1. Verfahren zur Überwachung der Synchronisation eines Zeitmultiplexsystems und zur Einleitung einer Neusynchronisation bei einem vorgegebenen Wert der Häufigkeit von Nichtübereinstimmung zwischen einem erwarteten Rahmenkennungswort und dem tatsächlich an dieser Stelle auftretenden Bitmuster,

dadurch gekennzeichnet,

daß sendeseitig während eines definierten Meßzeitraums (MI, M3, M5... Mn) in definierter zeitlicher Relation zur Rahmenkennung die Gerad- oder Ungeradzahligkeit der Summe aller ausgesendeten Bits eines logischen Zustands ermittelt wird,

daß ein Paritätsbit gebildet wird, dessen logischer Zu stand eine Aussage über die ermittelte Gerad- oder Ungeradzahligkeit abgibt,

daß das Paritätsbit in einen unbelegten Zeitschlitz des Pulsrahmens eingefügt wird,

daß empfangsseitig während desselben Meßzeitraumes in derselben zeitlichen Relation zur erkannten aber möglicherweise falschen Rahmenkennung die Gerad- oder Ungeradzahligkeit der Summe aller empfangenen Bits des sendeseitig gewählten logischen Zustands ermittelt wird und

daß das empfangsseitige Ergebnis mit der Aussage des empfangenen Paritätsbits verglichen wird.

2. Verfahren nach Anspruch 1,
dadurch gekennzeichnet
daß der Meßzeitraum (M1, M3, M5...Mn) der Länge eines Pulsrahmens entspricht.

3. Verfahren nach Anspruch 1 oder 2,
dadurch gekennzeichnet
daß der Meßzeitraum (M1, M3, M5...Mn) jeweils im Anschluss an das Auftreten eines blockweisen Rahmenkennungswortes (RKW) beginnt.

4. Verfahren nach Anspruch 7, 2 oder 3,
dadurch gekennzeichnet,
daß sende- und empfangsseitig die Bits des logischen Zustandes ”1” zur Ermittlung der Gerad- oder Ungeradzahligkeit herangezogen werden.

5. Verfahren nach Anspruch 4,
dadurch gekennzeichnet,
daß das Paritätsbit bei einer sendeseitigen Ungeradzahligkeit den logischen Zustand ”1” erhält.

6. Verfahren nach Anspruch 1,
dadurch gekennzeichnet,
daß eine Neusynchronisation bei 35% Nichtübereinstimmung eingeleitet wird.

7. Verfahren nach Anspruch 1,
dadurch gekennzeichnet,
daß das Paritätsbit in einen unbelegten Zeitschlitz des Meldewortes (MW) eingefügt wird.

8. Schaltungsanordnung zur Erzeugung von Paritätsbits nach Anspruch 5,
dadurch gekennzeichnet,
daß ein erstes UND-Gatter (5) vorgesehen ist, dessen erster Eingang (1) zur Aufnahme des Zeitmultiplexsignals und dessen zweiter Eingang (2) zur Aufnahme von Torimpulsen (TM) für den Meßzeitraum (M1, M2, M5... Mn) dient und

daß ein JK-Flipflop (6) vorgesehen ist, dessen J- und dessen K-Eingang mit dem Ausgang des UND-Gatters (5) verbunden sind, dessen Takteingang (3) zur Aufnahme des Bittaktes des Zeitmultiplexsignals (TZn), dessen Rückstelleingang (4) zur Aufnahme der Rückstellimpulse für den Meßzeitraum und dessen Ausgang (7) zur Abgabe der Paritätsbits dient.

9. Schaltungsanordnung zur empfangsseitigen Auswertung der Paritätsbits nach Anspruch 1,
dadurch gekennzeichnet,
daß eine Anordnung (1' bis 7') zur Erzeugung von Paritätsbits vorgesehen ist,

daß ein Äquivalenzgatter (10) vorgesehen ist, dessen erster Eingang mit dem ersten Eingang (1') des UND-Gatters (5') und dessen zweiter Eingang mit dem Ausgang (7') des JK-Flipflops (6') verbunden ist,

daß ein erstes D-Flipflop (11) vorgesehen ist, dessen D-Eingang mit dem Ausgang des Äquivalenzgatters (10) verbunden ist und dessen Takteingang (8) zur Aufnahme eines Taktes zur Anzeige des sendeseitigen Paritätsbits dient,

daß ein erstes Integrationsglied (12, 13) vorgesehen ist, dessen Eingang mit dem Ausgang des zweiten D-Flipflops (11) verbunden ist,

daß ein erster Komparator (14) vorgesehen ist, dessen invertierender Eingang mit dem Ausgang des ersten Integrationsgliedes (12, 13) und dessen nichtinvertierender Eingang mit dem Abgriff eines an Betriebsspannung liegenden Spannungsteilers (15, 16) verbunden ist,

daß ein zweites D-Flipflop (17) vorgesehen ist, dessen D-Eingang mit dem Ausgang des ersten Komparators (14) verbunden ist und dessen Takteingang (9) zur Aufnahme eines Rahmentaktes dient,

daß eine Diode (18) vorgesehen ist, deren Anode mit dem Ausgang des ersten Integrationsgliedes (12, 13) und deren Kathode mit dem Ausgang des zweiten D-Flipflops (17) verbunden ist,

daß ein zweites UND-Gatter (19) vorgesehen ist, dessen erster Eingang mit dem Ausgang des zweiten D-Flipflops (17) verbunden ist und dessen zweiter Eingang (3') der Aufnahme des Bittaktes (TZn) dient,

daß eine Synchronisiereinrichtung (20) vorgesehen ist, deren erster Eingang (1') der Aufnahme des Zeitmultiplexsignals dient, deren zweiter Eingang mit dem Ausgang des zweiten UND-Gatters (19) verbunden ist, dessen erster Ausgang (21) der Abgabe eines Neuen Rahmentaktes (TR) und dessen zweiter Ausganf (22) der Abgabe eines Alarmsignals dient,

daß ein zweites Integrationsglied (23, 24) vorgesehen ist, dessen Eingang mit dem Ausgang des ersten D-Flipflops (11) verbunden ist,

daß ein zweiter Komparator (25) vorgesehen ist, dessen invertierender Eingang mit dem Ausgang des zweiten Integrationsgliedes (23, 24) und dessen nichtinvertierender Eingang mit dem Abgriff des Spannungsteilers (15, 16) verbunden ist und

daß ein ODER-Gatter (26) vorgesehen ist, dessen erster Eingang mit dem zweiten Ausgang (22) der Synchronisiereinrichtung (20) und dessen zweiter Eingang mit dem Ausgang des zweiten Komparators (25) verbunden ist und dessen Ausgang (27) als Synchronalarmausgang dient.

## Claims

1. A method of monitoring the synchronisation of a t.d.m. system and of initiating resynchronisation at a predetermined value of the frequency of non-conformity between an expected frame code word and the bit pattern actually occurring at this position, characterised in that at the transmitting end, during a determinate measuring period (M1, M3, M5... Mn), in a determinate time relationship to the frame code, it is determined whether the sum of all the transmitted bits of a logic state is even or odd, that a parity bit is formed, the logic status of which provides a statement as to whether evenness or oddness has been determined, that the parity bit is inserted into an unoccupied time slot of the pulse frame,

that at the receiving end, during the same measuring period, in the same time relationship to the recognised but possibly incorrect frame code, it is determined whether the sum of all the received bits of the logic state which has been selected at the transmitting end is even or odd and

that the receiving-end result is compared with the statement contained in the received parity bit.

2. A method as claimed in claim 1, characterised in that the measuring period (M1, M3, MS... Mn) corresponds to the length of one pulse frame.

3. A method as claimed in claim 1 or 2, characterised in that the measuring period (M1,M3,M5...Mn) always commences following the occurrence of a block form frame code word (RKW).

4. A method as claimed in claim 1, 2 or 3, characterised in that at the transmitting end and at the receiving end the bits of the logic state "1" are used to determine the evenness or oddness.

5. A method as claimed in claim 4, characterised in that when oddness prevails at the transmitting end, the parity bit acquires the logic state "1".

6. A method as claimed in claim 1, characterised in that resynchronisation is initiated in the case of 35% non-conformity.

7. A method as claimed in claim 1, characterised in that the parity bit is inserted into an unoccupied time slot of the message word (MW).

8. A circuit arrangement for the generation of parity bits as claimed in claim 5, characterised in that a first AND-gate (5) is provided, the first input (1) of which serves to receive the t.d.m. signal and the second input (2) of which serves to receive gate pulses (TM) for the measuring period (M1,M2,M5...Mn) and

that a JK-flip-flop (6) is provided, the J- and K-inputs of which are connected to the output of the AND-gate (5), whose clock input (3) serves to receive the bit clock signal of the t.d.m. signal (T2M), whose reset input (4) serves to receive the reset pulses for the measuring period, and whose output (7) serves to emit the parity bits.

9. A circuit arrangement for analysing the parity bits at the receiving end as claimed in claim 1, characterised in that an arrangement (1' to 7') is provided which serves to generate parity bits,

that an equivalence gate (10) is provided, the first input of which is connected to the first input (1') of the AND-gate (5') and the second input of which is connected to the output (7') of the JK-flip-flop (6')

that a first D-flip-flop (11) is provided, the D-input of which is connected to the output of the equivalence gate (10) and the clock input (8) of which serves to receive a clock signal in order to indicate the transmitting-end parity bit,

that a first integration section (12, 13) is provided, the input of which is connected to the output of the second D-flip-flop (11),

that a first comparator (14) is provided, the inverting input of which is connected to the output of the first integration section (12, 13) and the non-inverting input of which is connected to the tapping of a voltage divider (15, 16) which is connected to operating potential,

that a second D-flip-flop (17) is provided, the D-input of which is connected to the output of the first comparator (14) and the clock input (9) of which serves to receive a frame clock signal,

that a diode (18) is provided, the anode of which is connected to the output of the first integration sectiion (12,13) and the cathode of which is connected to the output of the second D-flip-flop (17),

that a second AND-gate (19) is provided, the first input of which is connected to the output of the second D-flip-flop (17) and a second input of which (3') serves to receive the bit clock signal (T2M),

that a synchronising device (20) is provided, the first input (1') of which serves to receive the t.d.m. signal, the second input of which is connected to the output of the second AND-gate (19), the first output (21) of which serves to emit a new frame clock signal (TR) and a second output (22) of which serves to emit an alarm signal,

that a second integration section (23, 24) is provided, the input of which is connected to the output of the first D-flip-flop (11),

that a second comparator (25) is provided, the inverting input of which is connected to the output of the second integration section (23,24) and the non-inverting input of which is connected to the tapping of the voltage divider (15, 16) and

that an OR-gate (26) is provided, the first input of which is connected to the second output (22) of the synchronising device (20) and a second input of which is connected to the output of the second comparator (25), and the output (27) of which serves as synchronous alarm output.

## Revendications

1. Procédé pour contrôler la synchronisation d'un système de multiplexage temporel et pour introduire une nouvelle synchronisation, pour une valeur prédéterminée de la fréquence de non coïncidence entre un mot formant indicatif de trame, attendu, et le profil binaire apparaissant effectivement en cet emplacement, caractérisé par le fait que:

- du côté émission on détermine le caractère pair ou impair de la somme de tous les bits émis possédant un état logique pendant un intervalle de temps de mesure défini (M1, M3, M5... Mn), selon une relation temporelle définie par rapport à l'indicatif de trame,

- qu'on forme un bit de parité, dont l'état logique fournit une indication concernant le caractère pair ou impair déterminé,

- qu'on introduit le bit de parité dans un créneau temporel non occupé de la trame d'impulsions,

- que, du côté réception, on détermine le caractère pair ou impair de la somme de tous les bits reçus possédant l'état logique choisi du côté émission, pendant le même intervalle de temps de mesure et avec la même relation temporelle par rapport à l'indicatif de trame connu, mais éventuellement faux, et

- qu'on compare le résultat obtenu du côté réception à l'indication du bit de parité reçu.

2. Procédé suivant la revendication 1, caractérisé par le fait que l'intervalle de temps de mesure (M1, M3, M5...Mn) correspond à la longueur d'une trame d'impulsions.

3. Procédé suivant la revendication 1 ou 2, caractérisé par le fait que l'intervalle de temps de mesure (M1, M3, M5,...Mn) commence respectivement lors de l'apparition d'un mot (RKW) formant indicatif de trame, se présentant sous la forme d'un bloc.

4. Procédé suivant la revendication 1, 2 ou 3, caractérisé par le fait que, du côté émission et du côté réception, on utilise les bits possédant l'état logique "1" pour déterminer le caractère pair ou impair.

5. Procédé suivant la revendication 4, caractérisé par le fait que le bit de parité reçoit l'état logique "1" dans le cas du caractère impair du côté émission.

6. Procédé suivant la revendication 1, caractérisé par le fait qu une nouvelle synchronisation est déclenchée dans le cas d'une non coïncidence à 35 %.

7. Procédé suivant la revendication 1, caractérisé par le fait que le bit de parité est inséré dans un créneau temporel non occupé du mot de signalisation (MW).

8. Montage pour produire des bits de parité suivant la revendication 5, caractérisé par le fait que il est prévu une première porte ET (5) dont la première entrée (1) sert à recevoir le signal de multiplexage temporel et dont la seconde entrée (2) sert à recevoir des impulsions de porte (TM) pour l'intervalle de temps de mesure (M1, M2, M5... Mn), et

- qu'il est prévu une bascule bistable de type JK (6) dont l'entrée J et l'entrée K sont reliées à la sortie de la porte ET (5) et dont l'entrée de cadence (3) sert à recevoir la cadence binaire du signal de multiplexage temporel (T2M) et dont l'entrée de remise à l'état initial (4) sert à recevoir les impulsions de remise à l'état initial pour l'intervalle de temps de mesure et dont la sortie (7) sert à délivrer le bit de parité.

9. Montage pour exploiter, du côté réception, le bit de parité suivant la revendication 1, caractérisé par le fait:

- qu'il est prévu un dispositif (1' à 7') servant à produire des bits de parité,

- qu'il est prévu un circuit à coïncidence (10) dont une première entrée est reliée à une première entrée (1') de la porte (5') et dont la seconde entrée est reliée à la sortie (7') de la bascule bistable de type JK (6'),

- qu'il est prévu une première bascule bistable de type D (11), dont l'entrée D est reliée à la sortie du circuit à coïncidence (10) et dont l'entrée de cadence (8) est utilisée pour recevoir une cadence utilisée pour l'affichage du bit de parité présent du côté émission,

-qu'il est prévu un premier circuit d'intégration (12, 13) dont l'entrée est reliée à la sortie de la seconde bascule bistable de type D (11),

- qu'il est prévu un premier comparateur (14) dont l'entrée inverseuse est reliée à la sortie du premier circuit d'intégration (12, 13) et dont l'entrée non inverseuse est reliée à la prise d'un diviseur de tension (15, 16) raccordé à la tension de service,

- qu'il est prévu une seconde bascule bistable de type B (17) dont l'entrée B est reliée à la sortie du premier comparateur (14) et dont l'entrée de cadence (9) est utilisée pour recevoir une cadence de trame,

- qu'il est prévu une diode (18), dont l'anode est reliée à la sortie du premier circuit d'intégration (12, 13) et dont la cathode est reliée à la sortie de la seconde bascule bistable de type D (17),

- qu'il est prévu une seconde porte ET (19), dont la première entrée est reliée à la sortie de la seconde bascule bistable de type D (17) et dont la seconde entrée (3') est utilisée pour recevoir la cadence binaire (T2M),

- qu'il est prévu un dispositif de synchronisation (20), dont la première entrée (1') sert à recevoir le signal de multiplexage temporel et dont la seconde entrée est reliée à la sortie de la seconde porte ET (19) et dont la première sortie (21) sert à délivrer une nouvelle cadence de trame (TR) et dont la seconde sortie (22) sert à délivrer un signal d'alarme,

- qu'il est prévu un second circuit d'intégration (23, 24), dont l'entrée est reliée à la sortie de la première bascule bistable de type D (11),

- qu'il est prévu un second comparateur (25), dont l'entrée inverseuse est reliée à la sortie du second circuit d'intégration (23,24) et dont l'entrée non inverseuse est reliée à la prise du diviseur de tension (15, 16), et

- qu'il est prévu une porte OU (26), dont la prenière entrée est reliée à la second sortie (22) du dispositif de synchronisation (20) et dont la seconde entrée est reliée à la sortie du second comparateur (25) et dont la sortie (27) est utilisée en tant que sortie d'alarme de synchronisation.

**FIG 1**

**FIG 2**

0 111 913

# FIG 3

# FIG 4

3

# FIG 5